# EUROPEAN PATENT SPECIFICATION

(11) **EP 0 987 323 B1**
(45) Date of publication and mention of the grant of the patent: **08.12.2004**
(21) Application number: 98600014.9
(22) Date of filing: 21.08.1998
(51) Int. Cl.: C12H 1/16, C12C 7/04, C12C 7/20

(54) **Method of quality improvement of alcoholic beverages, by using electromagnetic waves**
Verfahren zur Qualitätsverbesserung von alkoholischen Getränken mit elektromagnetischen Wellen
Méthode d'amélioration de la qualité de boissons alcoolisées par ondes électromagnétiques

(43) Date of publication of application: 22.03.2000
(73) Proprietor: Nikolaou, Athanasios, Megara (Attikis) (GR)
(72) Inventor: Nikolaou, Athanasios, Megara (Attikis) (GR)
(74) Representative: Rohmann, Michael, Dr.

(56) References cited:
- EP-A- 0 336 262
- FR-A- 2 679 247

## Description

The invention relates to a method of quality improvement of alcoholic beverages, by using electromagnetic waves.

Therefore the invention belongs to the field of the electronic science, in combination of the science of food and drink technology.

The document FR-A 2679247 discloses a device intended for accelerating the process of conversion and/or change of alcoholic liquid products. Electric field and bio energy electricity are sent to the alcoholic liquids. This method although uses electromagnetic waves. However these electromagnetic waves are used only as means to activate the whole of the device. The electromagnetic waves used in this method are continues electromagnetic waves. The effects achieved with this method are not satisfactory.

According to older techniques, of alcoholic beverages quality improvement, in order for the quality improvement to be achieved and particularly the improvement of taste, the taste-after and scent, similar with the one which is being achieved through the natural maturity, many methods have been used, such as Gamma rays, or temperature alternation or ionization or laser radiation. These previous technical methods, bring forward a lot of disadvantages: In particular, the use of Gamma rays or temperature alteration or ionization or Laser radiation, have high cost and low productivity and as a result their application is limited. For these reasons, the above-mentioned used methods have never been more widely applied.

So, as fas as the quality improvement of part of alcoholic beverages is concerned, the old method of the natural maturity, continues widely to be applied until today, by leaving the alcoholic beverages to remain in bottles, tanks and barrels for a long period of time, counted in years. Nevertheless and this method, though it doesn't have the disadvantages of the other methods, which have been mentioned above, the use of Gamma rays or temperature alteration or ionization or Laser radiation, however presents as main disadvantages, on the one hand to demand the alcoholic beverages to stay for a long period of time (for years) in their bottling, until the desired level of their maturity is attained, in order to be conveyed for consumption, on the other hand to demand great expenses in order to maintain them for all these years, with a consequence, the high final cost of the product. Moreover by the end of the period, some of the beverages remain in the places of natural maturity, a serious part of the alcoholic beverage has been evaporated, which is then refilled with new product. Thus, new raise of the production cost is caused, with extra charge for the whole production and sale chain, up to the final user/consumer.

Furthermore, as far as the quality improvement of part of alcoholic beverages, which usually are not chosen to go under the process of the natural maturity, in concerned, no method is widely known until today.

It is an object of the invention is to bring up a solution to the above mentioned technical problems, of the quality improvement of alcoholic beverages.

This object is realised in a method according to claim 1. Claims 2 to 13 refer to preferred embodiments of the inventive method.

The present invention, introduces a new innovative method for the quality improvement of alcoholic beverages, which, particularly as those alcoholic beverages that are usually chosen to go through the process of the natural maturity are concerned, its results are alike to the results of the natural maturity itself. The quality improvement is being achieved, by the emission towards the alcoholic beverages, of electromagnetic waves, of a certain bundwidth of the electromagnetic waves which are being produced by electromechanical or by electronic devices, whose emission has a predetermined programming, controlled power, controlled time of application and controlled quality result.

The advantages of this method are that it brings important improvement of the quality characteristics of the alcoholic beverages, such as the scent, the taste and the taste-after. In particular, this method brings important quality improvement to those alcoholic beverages which are not chosen to go through the process of natural maturity an immediately after their production are sent straight for consumption but also the those alcoholic beverages which are chosen to go through the process of natural maturity by remaining in bottles, tanks, barrels etc. for a long time, counted in years, giving them characteristics similar to those that the natural maturity gives them. Moreover, another advantage of the application of this method is that, whereas during the process of natural maturity, a part of the alcoholic beverage, is being evaporated, this new method does not reduce the quantity of the product on which it is applied. Moreover, an extremely important advantage of this method is that, the beginning of the improvement, is brought on with the beginning of the method's application, while the time demanded for its application in order essential improvement to be brought on, is short, counted in hours. Thus the methods adopted until today, of conservation and maturing alcoholic beverages in bottles, tanks, barrels etc., are avoided and consequently there is reduction in the production cost and in the final product price as well, in the benefit of the financial interest of the manufacturer as well as of the consumer. Moreover, another advantage of this method, is that it can be widely applied in industries, as it doesn't require any change to the specifications in use, of the existing industrial of handicraft premises, not only during the stage of the production process but also during the stage of the maturity, bottling and storage of the alcoholic beverages as well, as it is applied to the already existing premises. Another advantage of this method is that, the alcoholic beverages on which it is applied can be at the stage of the brewing process, of after the completion of this process. Another advantage of this method is that, it can be used in any kind of storage or bottling, final or not, alcoholic beverages, and it can also have domestic usage. Another advantage of this method is that, its application is financially profitable, as it requires very low cost of operation.

The invention is described below, accompanied by non-exclusive examples and with reference to the attached drawings, which show ways of application of the method, which is the subject of the present invention.

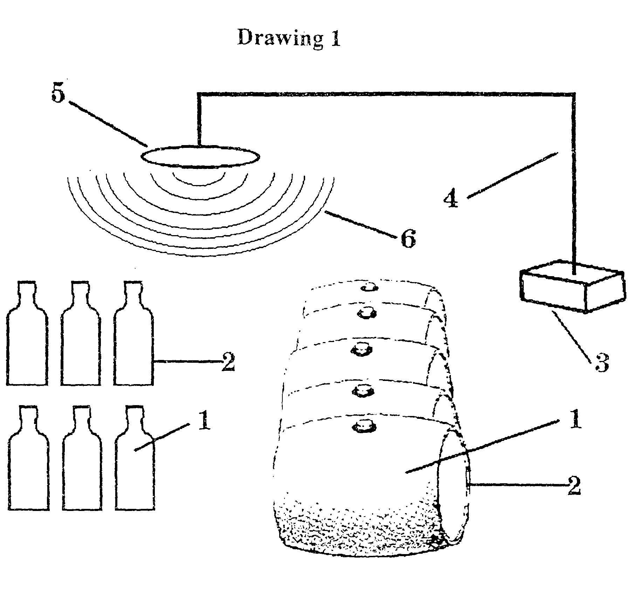

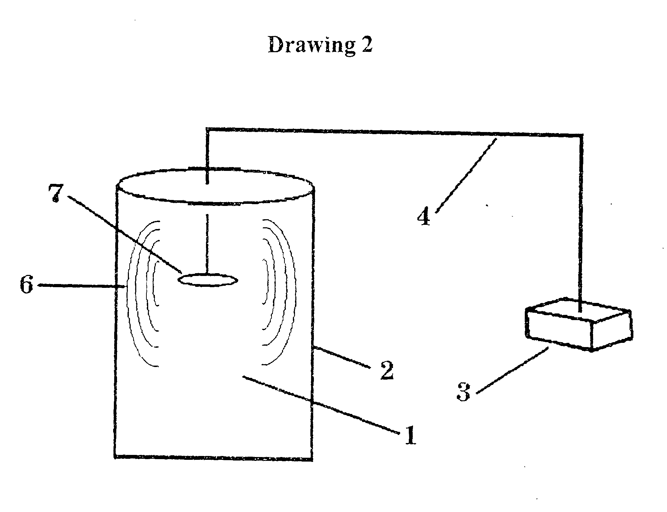

Drawing 1 and drawing 2 illustrate ways of applying the invention in alcoholic beverages restored in placed of industrial, handicraft or commercial premises.

One way of application of this method is described with reference to the drawings. The alcoholic beverages (1) are placed under the usual temperature circumstances, in places that are usually used for starage, such as industries, underground cellars, open or closed warehouses etc., in containers made of the usually used material, such as wood, glass, synthetic material, or metallic containers etc (2). Electromechanical of electronic device (3) of programmed operation is placed near them (1), which produces electromagnetic waves (6), and from which a wiring (4) is led an this wiring ends up to their emission antenna (5). The electromagnetic waves (6) are emitted toward the containers (2) with the alcoholic beverages (1). The emission antenna may be sunk into the alcoholic beverages (7) or not (5), even if it is an undetached part of the emission device (3) of even if it is connected with the device by a wiring (4). The electromechanical or electronic device (3) produces electromagnetic waves (6), which cover wider wavelength bands from 1nm to 10 000 km, with the harmonic frequencies which are produced by the device an they are emitted simultaneously, either to all wavelengths from 1nm to 10 000 km or, in one or more parts of specific areas. The frequencies ranges where these electromagnetic waves belong, are characterized by the international names EHL (extremely high frequency), SHF (super high frequency), UHF (ultra high frequency), VHF (very high frequency), HF (high frequency), MF (medium frequency), LF (low frequency), VLF (very low frequency). Also the frequency field of the ultraviolet, infrared spectrum and visible light. The emission of the electromagnetic waves (6) is being programmed through electromechanical or electronic circuit of the device (3), in such as not to be continuous but to be pulsate. The duration of the outcoming pulses, as much as, the duration of the interruptions between them can be of stable or unstable time.

The emission of the electromagnetic waves can be modulated in any way or can be non modulated.

The emission power of the electromagnetic waves (6) is being increased in every augmentative alteration of the distance between the emission's source (5) of the electromagnetic waves and the alcoholic beverages (1), or also in every augmentative alteration of the volume of the alcoholic beverages on which the method is being applied, in order to achieve the same quality improvement at the same time and vice versa. Also, in every augmentative alteration of the distance between the emission's source (5) of the electromagnetic waves and the alcoholic beverages (1) or also in every augmentative alteration of the volume of the alcoholic beverages on which the method is being applied, the duration time of the application is being increased, in order to be succeeded with the same power, the same quality improvement and vise versa.

Besides, there is the possibility of electromagnetic waves' emission from more than one devices simultaneously at the same place. The total emission power simultaneously provided, should always be low in order to get the desired result, without causing substantial temperature increase of the alcoholic beverages, on which the present method is applied and without becoming lower than 0,0001 mWatt, either one or more devices are used.

The user of the method, hat the choice to reduce the required time of bringing on the desired level of quality improvement, by increasing the simultaneously provided emission power of the electromagnetic waves (6), which should be maintained in low levels, in order not to cause substantial temperature increase of the alcoholic beverages and vise versa as well, however without permitting the emission power becoming less than 0,0001 mWatt.

The commencement of the improvement comes upon with the commencement of the method's application, while the time of it's application which is necessary for the oncoming of substantial improvement, is short, counted in hours.

The duration of the method's application, is connected to the kind of the alcoholic beverage, on which the method is applied and it is proportional to the desired quality result. So, the longer the duration of the method's application, the higher the quality improvement of the alcoholic beverage on which the method is applied.

The quality improvement of the alcoholic beverages, which has been achieved until the interruption of the method's application, by the time point chosen by the user, is maintained stable despite the interruption of the method's application. By the termination of the method's application, the process of their natural maturity, is continued.

The present method can find wide usage in industries, handcrafts, commercial undertakings, etc., of alcoholic beverages and brings on as a result, the substantial quality improvement of natural characteristics of the alcoholic beverages, and particularly of the scent, the taste, the taste-after, of those alcoholic beverages which are forwarded for consumption, straight after their production, and also on those alcoholic beverages that are usually chosen to go under the natural maturity process, giving to the latter, properties that are similar to those offered to them by the natural maturity. This method can also find domestic usage. In order for this method to be applied, the alcoholic beverages can be at the stage of brewing, or they can also be at the stage after the completion of this brewing process.

## Claims

1. Method of quality improvement of alcoholic beverages (1), by using electromagnetic waves (6), of a certain bandwidth of the electromagnetic waves, produced by electromechanical or electronic devices (3), whose emission has predetermined programming, controlled power, controlled time of application and controlled quality result, which are emitted towards the alcoholic beverages (1), which is **characterized by** the fact that the emission of the electromagnetic waves (6), towards the alcoholic beverages (1), is programmed through electromechanical or electronic device circuit (3), in a way as not to be continuous but to be pulsate and that the programmed vibrated emission of the electromagnetic waves (6), towards the alcoholic beverages (1), has short time interruptions of their emission signal, of variable spacing or not and also by the fact that the duration of the outcoming pulses, as well as the duration of the interruptions between them, can be of stable or unstable time.

2. Method according to claim 1, **characterized by** the fact that, the frequencies ranges where these electromagnetic waves belong, are indicated by the international names EHL (extremely high frequency), SHF (super high frequency), UHF (ultra high frequency), VHF (very high frequency), HF (high frequency), MF (medium frequency), LF (low frequency), VLF (very low frequency), also the frequency range of the ultraviolet, infrared spectrum and visible light.

3. Method according to claim 1 or claim 2 **characterized by** the fact that, the emission of the electromagnetic waves (6) can be modulated in any way or can be non modulated as well.

4. Method according to any of the claims 1 to 3, **characterized by** the fact that, for its application may be used a device, with an emission antenna sunk in the alcoholic beverages (7) or not (5), even if it consists an inseparable part of the emission device (3) or even if it is connected to it by a wiring (4), as well as by the fact that during the application of the method, the alcoholic beverages (1) or also the emission device (3) may be moved.

5. Method according to any of the claims 1 to 4, **characterized by** the fact that, the emission power of the electromagnetic waves (6), is being increased in every augmentative alteration of the distance between the emission's source (5) of the electromagnetic waves and the alcoholic beverages (1), or also in every augmentative alteration of the volume of the alcoholic beverages on which the method is being applied, in order to achieve the same quality improvement at the same time and vice versa, as well as by the fact that in every augmentative alteration of the distance between the emission's source (5) of the electromagnetic waves and the alcoholic beverages (1) or also in every augmentative alteration of the volume of the alcoholic beverages on which the method is being applied, the duration time of the application is being increased, in order to be succeeded with the same power, the same quality improvement and vise versa.

6. Method according to any of the claims 1 to 5, **characterized by** the fact that, its application can be also carried out, with electromagnetic waves emission from more than one devices simultaneously at the same place, which devices are programmed to emit electromagnetic waves of the same or of different power and by the fact that the total emission power simultaneously provided, should always be low in order to get the desired result, without causing substantial temperature increase of the alcoholic beverages, on which the present method is applied and without becoming lower than 0,0001 mWatt, either one or more devices are used.

7. Method according to any of the claims 1 to 6, **characterized by** the fact that, the user of the method, has the possibility to reduce the required time of bringing on the desired level of quality improvement, by increasing the simultaneously provided emission power of the electromagnetic waves (6), which should be maintained in low levels, in order not to cause substantial temperature increase of the alcoholic beverages (1) and vise versa as well, however without permitting the emission power becoming less than 0,0001 mWatt.

8. Method according to any of the claims 1 to 7, **characterized by** the fact that, the duration of the method's application, is connected to the kind of the alcoholic beverage, on which the method is applied and by the fact that the duration of the method's application is proportional to the desired quality result, so, as the longer the duration of the methods' application, the higher the quality improvement of the alcoholic beverage on which the method is applied.

9. Method according to claim 1, **characterized by** the fact that, the quality improvement of the alcoholic beverages, which has been achieved until the interruption of the method's application, by the time point chosen by the user, is maintained stable despite the interruption of the method's application and by the fact that, by the termination of the method's application, the process of their natural maturity, is continued.

10. Method according to claim 1, **characterized by** the fact that, it brings on, quality improvement of natural characteristics of the alcoholic beverages and particularly of the scent, the taste and the taste-after, and also by the fact that the method brings on important quality improvement to those alcoholic beverages which are not chosen to go through the process of natural maturity and immediately after their production are straight forwarded for consumption but also to those alcoholic beverages which are chosen to go through the process of natural maturity by remaining in bottles, tanks, barrels etc. for a long time, counted in years, giving to the latter, properties similar to those that the natural maturity gives them.

11. Method according to claim 1, **characterized by** the fact that, the beginning of the quality improvement of the alcoholic beverages, is brought on with the beginning of the method's application, while the time demanded for its application in order essential improvement to be brought on, is short, counted in hours.

12. Method according to claim 1, **characterized by** the fact that, it can be applied on final or not, alcoholic beverages, meaning, on alcoholic beverages, which may be at the stage of brewing, or after the completion of this brewing process, notwithstanding the kind of their storage or get up material (2), even if between the emission source and the alcoholic beverages is interposed any kind of material.

13. Method according to claim 1, **characterized by** the fact that, the method can be applied in industries, handicrafts, commercial undertakings, as well as domestically.

## Patentansprüche

1. Verfahren zur Qualitätsverbesserung alkoholischer Getränke (1) mittels elektromagnetischer Wellen (6) einer bestimmten Bandbreite, die durch elektromechanische oder elektronische Vorrichtungen (3) erzeugt werden, deren Emission eine vorbestimmte Programmierung, eine gesteuerte Leistung, eine gesteuerte Anwendungszeit und ein gesteuertes Qualitätsergebnis aufweist und die in Richtung auf die alkoholischen Getränke (1) gesendet werden, **dadurch gekennzeichnet, dass** das Aussenden der elektromagnetischen Wellen (6) in Richtung auf die alkoholischen Getränke (1) durch die Schaltung der elektromechanischen oder elektronischen Vorrichtung (3) derart programmiert ist, dass diese nicht kontinuierlich, sondern gepulst ausgesendet werden und dass das programmiert gepulste Aussenden der elektromagnetischen Wellen (6) in Richtung auf die alkoholischen Getränke (1) kurze, in unterschiedlichen oder in gleichmäßigen Abständen erfolgende Zeitunterbrechungen in ihrem Emissionssignal verursacht, und dass die Zeitdauer der austretenden Pulse sowie die Dauer der Unterbrechungen zwischen diesen Pulsen konstant oder nicht konstant sein kann.

2. Verfahren nach Anspruch 1, **dadurch gekennzeichnet, dass** die Frequenzbereiche, denen diese elektromagnetischen Wellen angehören, mit den internationalen Bezeichnungen EHF (extrem hohe Frequenz), SHF (super hohe Frequenz), UHF (ultra hohe Frequenz), VHF (sehr hohe Frequenz), HF (Hochfrequenz), MF (Mittelfrequenz), LF (Niederfrequenz), VLF (sehr niedrige Frequenz) angegeben werden, einschließlich des ultravioletten, des infraroten und des sichtbaren Frequenzbereichs.

3. Verfahren nach Anspruch 1 oder 2, **dadurch gekennzeichnet, dass** das Aussenden der elektromagnetischen Wellen (6) beliebig moduliert oder auch nicht moduliert sein kann.

4. Verfahren nach einem der Ansprüche 1 bis 3, **dadurch gekennzeichnet, dass** zu seiner Anwendung eine Vorrichtung verwendet werden kann, die eine Sendeantenne aufweist, welche in die alkoholischen Getränke eingetaucht (7) oder nicht eingetaucht (5) sein kann, wobei sie einstückig mit der Sendevorrichtung (3) ausgebildet oder mit dieser durch eine Verkabelung (4) verbunden sein kann, sowie dadurch, dass bei Anwendung des Verfahrens die alkoholischen Getränke (1) oder aber die Sendevorrichtung (3) beweglich sind.

5. Verfahren nach einem der Ansprüche 1 bis 4, **dadurch gekennzeichnet, dass**, um die gleiche Qualitätsverbesserung in der gleichen Zeit und umgekehrt zu erzielen, die Sendeleistung der elektromagnetischen Wellen (6) bei jeder Änderung, die den Abstand zwischen der Emissionsquelle (5) der elektromagnetischen Wellen und den alkoholischen Getränke (1) erhöht, oder aber bei jeder Änderung des Volumens der mit dem Verfahren behandelten alkoholischen Getränke, zunimmt, und dadurch, dass bei jeder die Strecke zwischen der Emissionsquelle (5) der elektromagnetischen Wellen und den alkoholischen Getränken verlängernden Änderung bzw. bei jeder Änderung, die das Volumen der alkoholischen Getränke, auf die das Verfahren angewendet wird, erhöht, die Zeitdauer der Anwendung verlängert wird, um somit die gleiche Leistung, die gleiche Qualitätsverbesserung und umgekehrt zu erzielen.

6. Verfahren nach einem der Ansprüche 1 bis 5, **dadurch gekennzeichnet, dass** es auch angewendet werden kann, indem die elektromagnetischen Wellen von mehr als einer Vorrichtung gleichzeitig und am gleichen Ort ausgesendet werden, wobei die Vorrichtungen dazu programmiert sind, elektromagnetische Wellen gleicher oder unterschiedlicher Leistung auszusenden, und dass die gleichzeitig bereitgestellte Sendeleistung immer gering sein sollte, so dass das gewünschte Ergebnis erzielt werden kann, ohne dabei die Temperatur der mit dem Verfahren behandelten alkoholischen Getränke wesentlich zu erhöhen und ohne dass die Leistung unter 0,0001 mWatt sinkt, unabhängig davon, ob eine oder mehrere Vorrichtungen verwendet werden.

7. Verfahren nach einem der Ansprüche 1 bis 6, **dadurch gekennzeichnet, dass** der Anwender des Verfahrens die Möglichkeit hat, die Zeit, die benötigt wird, um die gewünschte Qualitätsverbesserung zu erzielen, durch Erhöhung der gleichzeitig bereitgestellten Sendeleistung der elektromagnetischen Wellen (6), die niedrig gehalten werden sollte, zu reduzieren, um einen wesentlichen Temperaturanstieg der alkoholischen Getränke (1) zu vermeiden und umgekehrt, ohne jedoch zuzulassen, dass die Leistung unter 0,0001 mWatt sinkt.

8. Verfahren nach einem der Ansprüche 1 bis 7, **dadurch gekennzeichnet, dass** die Dauer der Anwendung des Verfahrens von der Art des alkoholischen Getränks, das mit dem Verfahren behandelt wird, abhängig ist und dass die Dauer der Anwendung des Verfahrens proportional zur gewünschten erzielten Qualität ist, so dass die Qualitätsverbesserung des mit dem Verfahren behandelten alkoholischen Getränks steigt, je länger das Verfahren angewendet wird.

9. Verfahren nach Anspruch 1, **dadurch gekennzeichnet, dass** die Qualitätsverbesserung der alkoholischen Getränke, welche bis zu dem vom Nutzer gewählten Zeitpunkt, an dem das Verfahren unterbrochen wird, erzielt wurde, trotz der Unterbrechung der Behandlung stabil gehalten wird, und dass, nachdem die Behandlung mit dem Verfahren beendet ist, der Prozess der natürlichen Reifung weitergeführt wird.

10. Verfahren nach Anspruch 1, **dadurch gekennzeichnet, dass** es eine Qualitätsverbesserung der natürlichen Eigenschaften der alkoholischen Getränke, insbesondere des Aromas, des Geschmacks und des Nachgeschmacks, mit sich bringt, und dass das Verfahren eine wesentliche Qualitätsverbesserung derjenigen alkoholischen Getränke erzielt, welche den natürlichen Reifungsprozess nicht durchlaufen sollen, sondern unmittelbar nach deren Herstellung direkt zum Verbrauch freigegeben werden, aber auch eine Qualitätsverbesserung derjenigen alkoholischen Getränke mit sich bringt, die den natürlichen Reifungsprozess durchlaufen sollen, indem sie jahrelang in Flaschen, Behältern, Fässern usw. gehalten werden, wobei diese letzteren dadurch Eigenschaften erhalten, die denen, die sie durch einen natürlichen Reifungsprozess erlangen würden, ähnlich sind.

11. Verfahren nach Anspruch 1, **dadurch gekennzeichnet, dass** der Beginn der Qualitätsverbessung der alkoholischen Getränke mit dem Beginn der Behandlung mit dem Verfahren einsetzt, wobei die Zeit, die erforderlich ist, um eine wesentliche Verbesserung zu erzielen, kurz ist und nur Stunden beträgt.

12. Verfahren nach Anspruch 1, **dadurch gekennzeichnet, dass** es auf fertige oder auf nicht fertige alkoholische Getränke anwendbar ist, das heißt auf alkoholische Getränke, die möglicherweise noch im Stadium der Herstellung sind oder die bereits fertig hergestellt sind, ungeachtet des verwendeten Lagerungs- bzw. Gärungsmittels (2), selbst wenn zwischen der Aussendequelle und den alkoholischen Getränken ein beliebiges Gerät eingefügt ist.

13. Verfahren nach Anspruch 1, **dadurch gekennzeichnet, dass** das Verfahren in der Industrie, im Handwerk, in Handelsunternehmen sowie privat verwendet werden kann.

## Revendications

1. Procédé destiné à améliorer la qualité de boissons alcooliques (1) en utilisant des ondes électromagnétiques (6) d'une certaine largeur de bande produites par des dispositifs électromécaniques ou électroniques (3), dont l'émission est programmée de manière prédéterminée, dont la puissance, le temps d'application et la qualité obtenue sont contrôlés et qui sont envoyées vers les boissons alcooliques (1), ce procédé étant **caractérisé par le fait que** l'émission des ondes électromagnétiques (6) envoyées vers les boissons alcooliques (1) est programmée par le circuit du dispositif électromécanique ou électronique (3) de manière à ne pas être continue mais pulsée et que l'émission programmée vibrée des ondes électromagnétiques (6) envoyées vers les boissons alcooliques (1) entraîne des signaux d'émission présentant de courtes interruptions à intervalles variables ou non et **par le fait que** la durée des impulsions en sortie ainsi que la durée des interruptions peut être variable ou invariable.

2. Procédé selon la revendication 1, **caractérisé par le fait que** les bandes de fréquences auxquelles appartiennent ces ondes électromagnétiques sont désignées par leur abréviation internationale EHF (fréquences extrêmement hautes), SHF, (super hautes fréquences), UHF (ultra hautes fréquences), VHF (très hautes fréquences), HF (hautes fréquences), MF (moyennes fréquences), LF (basses fréquences), VLF (très basses fréquences), y compris la bande de fréquences de l'ultraviolet, du spectre infrarouge et de la lumière visible.

3. Procédé selon la revendication 1 ou 2, **caractérisé par le fait que** l'émission des ondes électromagnétiques (6) peut être modulée à volonté ou peut ne pas être modulée.

4. Procédé selon l'une quelconque des revendications 1 à 3, **caractérisé par le fait que**, pour l'appliquer, on peut utiliser un dispositif muni d'une antenne d'émission plongée (7) ou non (5) dans les boissons alcooliques, ledit dispositif pouvant être soit réalisé d'un seul tenant avec le dispositif d'émission (3), soit relié à celui-ci par un câblage (4), ainsi que **par le fait que** pendant l'application du procédé les boissons alcooliques (1) ou bien le dispositif d'émission (3) peut être déplacé.

5. Procédé selon l'une quelconque des revendications 1 à 4, **caractérisé par le fait que** la puissance d'émission des ondes électromagnétiques (6) augmente chaque fois que l'on augmente la distance entre la source d'émission (5) des ondes électromagnétiques et les boissons alcooliques (1) ou que l'on augmente le volume des boissons alcooliques subissant le traitement de manière à améliorer la qualité dans le même temps et vice versa et **par le fait qu'**à chaque augmentation de la distance entre la source d'émission (5) des ondes électromagnétiques et les boissons alcooliques (1) ou à chaque augmentation du volume des boissons alcooliques subissant le traitement, on augmente la durée du traitement de manière à ce que l'on obtienne la même puissance, la même qualité améliorée et vice versa.

6. Procédé selon l'une quelconque des revendications 1 à 5, **caractérisé par le fait qu'**il peut aussi être mis en oeuvre en émettant les ondes électromagnétiques simultanément et au même endroit à partir de plus d'un dispositif, ces dispositifs étant programmés pour envoyer des ondes électromagnétiques de la même puissance ou d'une puissance différente et **par le fait que** la puissance d'émission totale fournie simultanément devrait toujours être faible si on veut obtenir le résultat souhaité sans augmenter de façon sensible la température des boissons alcooliques subissant le traitement selon le présent procédé et sans qu'elle ne baisse en dessous de 0,0001 mWatt et ce, indépendamment du nombre de dispositifs utilisés.

7. Procédé selon l'une quelconque des revendications 1 à 6, **caractérisé par le fait que** la personne mettant en oeuvre ce procédé a la possibilité de réduire le temps nécessité pour obtenir l'amélioration souhaitée de la qualité en augmentant la puissance d'émission des ondes électromagnétiques (6) fournie simultanément et qui devrait toujours être maintenue sur un faible niveau afin de ne pas augmenter sensiblement la température des boissons alcooliques (1) et vice versa, et ceci toutefois sans permettre à la puissance d'émission de baisser en dessous de 0,0001 mWatt.

8. Procédé selon l'une quelconque des revendications 1 à 7, **caractérisé par le fait que** la durée du traitement selon ce procédé dépend de la sorte de boisson alcoolique subissant le traitement et **par le fait que** la durée du traitement selon le procédé est proportionnelle à la qualité que l'on veut obtenir, de sorte que plus le traitement est long, plus on améliorera la qualité de la boisson alcoolique subissant le traitement selon le procédé.

9. Procédé selon la revendication 1, **caractérisé par le fait que** l'amélioration de la qualité des boissons alcooliques obtenue jusqu'à interruption du traitement, cette interruption ayant lieu à un moment choisi par la personne mettant en oeuvre le procédé, est maintenue constante malgré l'interruption du traitement et **par le fait qu'**une fois le traitement selon le procédé terminé, le travail de maturation naturelle continue.

10. Procédé selon la revendication 1, **caractérisé par le fait qu'**il améliore la qualité des caractéristiques naturelles des boissons alcooliques, notamment de l'arôme, du goût et de l'arrière-goût, ainsi que **par le fait que** le procédé permet d'obtenir une qualité nettement améliorée non seulement des boissons alcooliques auxquelles on ne permet pas de faire le travail de maturation naturelle, mais qui sont destinées à être consommées immédiatement après leur production mais aussi des boissons alcooliques destinées à faire le travail de maturation naturelle en les conservant pendant de longues années dans des bouteilles, des récipients, des tonneaux, etc., le procédé leur donnant ainsi des propriétés similaires à celle que leur conférerait la maturation naturelle.

11. Procédé selon la revendication 1, **caractérisé par le fait que** l'amélioration de la qualité des boissons alcooliques commence dès le début du traitement selon le procédé, le temps nécessaire à l'application de ce procédé pour obtenir une amélioration sensible étant court et ne dépassant pas plusieurs heures.

12. Procédé selon la revendication 1, **caractérisé par le fait qu'**il peut être appliqué à des boissons alcooliques finies ou non, c'est-à-dire à des boissons alcooliques en cours de production ou bien une fois la production terminée, et ce, quel que soit le moyen de stockage ou de fermentation (2) et même si, entre la source d'émission et les boissons alcooliques, est interposé un matériel quelconque.

13. Procédé selon la revendication 1, **caractérisé par le fait que** le procédé peut être mis en ceuvre dans le secteur de l'industrie, de l'artisanat, des entreprises commerciales et en privé.
